**Europäisches Patentamt**

**European Patent Office**

**Office européen des brevets**

(11) Numéro de publication : **0 367 640 B1**

## (12) FASCICULE DE BREVET EUROPEEN

(45) Date de publication du fascicule du brevet :
02.12.92 Bulletin 92/49

(51) Int. Cl.⁵ : **F16B 19/00**

(21) Numéro de dépôt : **89402580.8**

(22) Date de dépôt : **20.09.89**

(54) **Plot de fixation pour montages divers et support quelconque équipé de ce plot.**

(30) Priorité : **22.09.88 FR 8812388**

(43) Date de publication de la demande :
**09.05.90 Bulletin 90/19**

(45) Mention de la délivrance du brevet :
**02.12.92 Bulletin 92/49**

(84) Etats contractants désignés :
**DE GB IT**

(56) Documents cités :
**DE-U- 8 022 569**
**GB-A- 780 499**
**GB-A- 1 520 891**
**US-A- 4 699 553**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Lalanne, André**
**12 Rue Paul Eluard**
**F-93200 Saint-Denis (FR)**

(74) Mandataire : **Durand, Yves Armand Louis et al**
**Cabinet Z. Weinstein 20, Avenue de Friedland**
**F-75008 Paris (FR)**

## Description

La présente invention a essentiellement pour objet un plot de fixation amovible permettant d'effectuer des montages divers.

Elle vise également un support quelconque tel que par exemple un montant ou une paroi sur lequel est monté, de manière amovible ce plot.

On a déjà proposé sur le marché diverses structures de plots qui peuvent être montés sur un support d'une façon amovible par emboîtement ou par enclenchement, ou bien d'une façon définitive par rivetage ou soudage, lesquels plots peuvent être utilisés pour supporter ou accrocher des éléments quelconques.

Par ailleurs, on connaît d'après le document GB-A-780 499 un plot de fixation du type décrit dans le préambule de la revendication 1.

Toutefois, les structures de plots actuellement connues sont parfois complexes, coûteuses, difficiles à monter sur un support et à démonter, et peu solides en position montée.

Aussi, la présente invention a pour but de remédier à ces inconvénients en proposant un plot de fixation d'une conception mécanique simple, robuste, peu coûteuse, facile à monter sur un support et très rigidement lié à ce support en position montée.

A cet effet, l'invention a pour objet un plot de fixation pour montages divers et du type comprenant un axe dont l'une des extrémités porte une tête et dont l'autre extrémité porte un élément allongé qui est insérable dans le trou d'un support quelconque et dont la rotation permet le verrouillage du plot sur le support, tandis qu'entre la tête et l'élément allongé, est montée à rotation libre sur l'axe au moins une pièce constamment sollicitée en direction de l'élément allongé par un ressort interposé entre ladite pièce et ladite tête, caractérisé en ce que la pièce, sollicitée par un ressort sous forme de rondelle-ressort comporte sur sa face située du côté de l'élément allongé, une partie en saillie possédant une forme oblongue correspondant sensiblement à celle du trou dans le support et une épaisseur définissant une distance entre la face d'extrémité libre de la pièce et la face précitée, qui est légèrement plus petite que la hauteur du trou.

Le plot selon cette invention est encore caractérisé par une autre pièce pourvue d'un anneau et montée à rotation libre sur l'axe entre la pièce précitée et la rondelle-ressort.

On précisera encore que la face de l'élément allongé située du côté de la pièce précitée comporte des rainures orthogonales à la direction longitudinale dudit élément allongé, et susceptibles de s'enclencher sur le bord du trou.

Ainsi, après rotation de l'élément allongé pour effectuer le verouillage, celui-ci viendra se verrouiller positivement grâce aux rainures, sur le bord du trou.

La tête du plot selon cette invention peut présenter soit la forme d'un ergot à faces parallèles, soit la forme d'un bouton bombé convexe et comportant des empreintes pour les doigts.

L'invention vise également un support quelconque, tel que par exemple un montant, une paroi ou analogue, muni d'un ou plusieurs trous oblongs possédant un bord tombé et susceptibles de recevoir chacun un plot de fixation répondant à l'une et/ou l'autre des caractéristiques susmentionnées.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue en coupe axiale d'un premier mode de réalisation de plot de fixation selon cette invention, illustré en position montée sur un support ;

La figure 2 est une vue de l'arrière du montage de la figure 1, suivant la flèche II de cette figure ;

La figure 3 est une vue en coupe suivant la ligne III-III de la figure 1 ;

La figure 4 est une vue de face suivant la flèche IV de la figure 3 ;

La figure 5 est une vue en coupe axiale d'un deuxième mode de réalisation de plot de fixation conforme aux principes de cette invention, illustré en position montée sur un support ;

La figure 6 est une vue suivant la flèche VI de la figure 5 ;

La figure 7 est une vue en coupe suivant la flèche VII-VII de la figure 5 ; et

La figure 8 est une vue suivant la flèche VIII de la figure 5.

En se reportant aux figures, on voit qu'un plot de fixation selon cette invention comprend essentiellement un axe 1 dont une extrémité porte une tête 2 et dont l'autre extrémité porte un élément allongé en forme de barrette 3 qui, suivant l'exemple de réalisation représenté, est solidaire de l'axe 1 grâce à un écrou 4.

La tête 2, l'axe 1 et la barrette 3 sont solidaires en rotation.

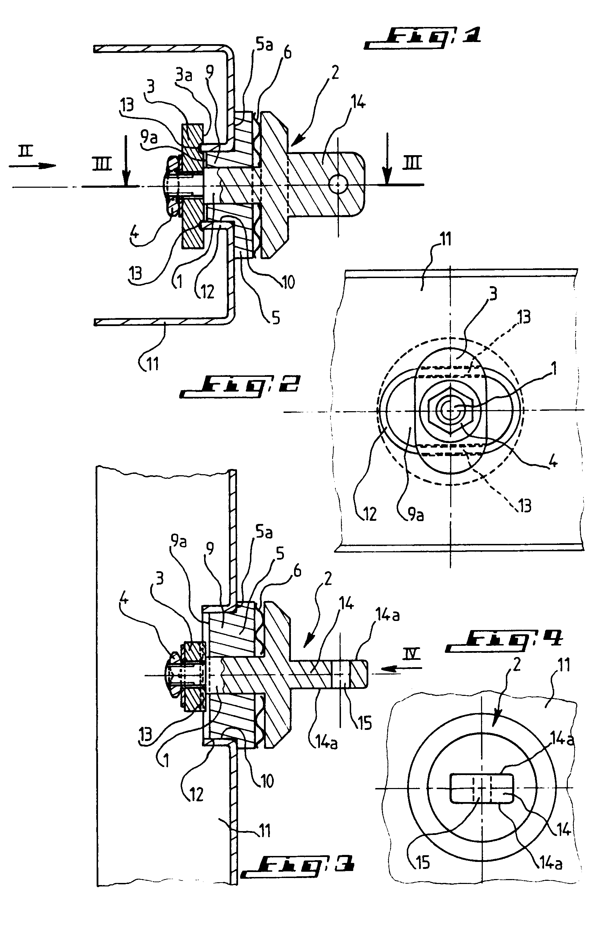

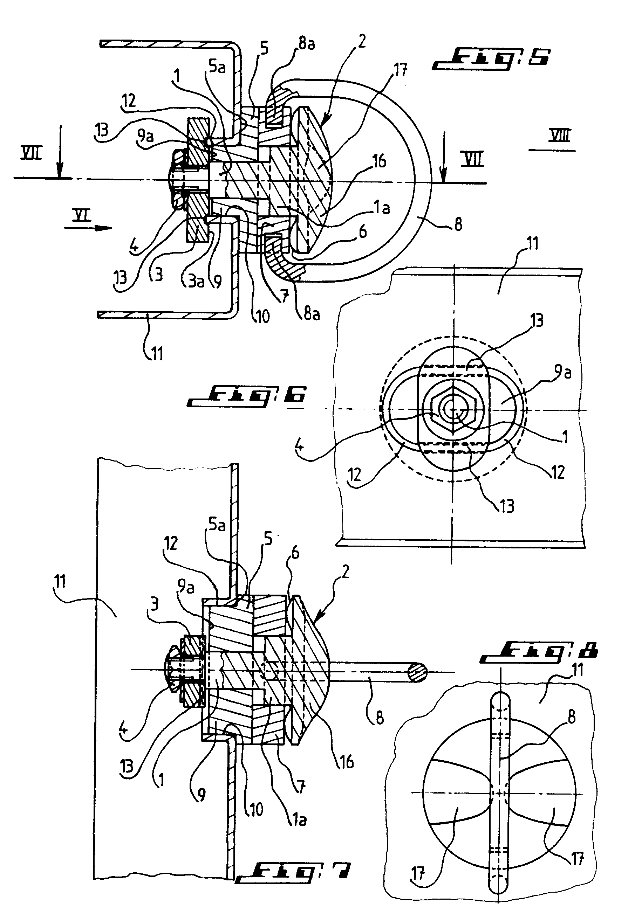

Entre la tête 2 et la barrette 3, est montée à rotation libre sur l'axe 1 une pièce 5 qui est sollicitée constamment vers la barrette 3 par une rondelle-ressort 6 interposée entre la pièce 5 et la tête 2, comme on le voit sur le mode de réalisation illustré par les figures 1 à 4, ou bien interposée entre la tête 2 et une autre pièce 7 pourvue d'un anneau rotatif 8 et montée à rotation libre sur l'axe 1 entre la pièce 5 citée précédemment et ladite rondelle-ressort, comme on le voit sur le mode de réalisation illustré par les figures 5 à 8.

Dans les deux modes de réalisation, la pièce 5 comporte sur sa face 5a située du côté de l'élément allongé 3, une partie en saillie repérée en 9.

Cette partie en saillie 9, de même que la barrette 3, possèdent une forme correspondant sensiblement à celle d'un trou oblong 10 pratiqué dans un support 11, tel que par exemple un profilé, sur lequel peut être monté le plot de fixation selon cette invention, comme cela sera décrit en détail plus loin.

Le trou oblong 10 possède un bord tombé 12, et l'épaisseur de la partie en saillie 9, c'est-à-dire la distance entre la face d'extrémité libre 9a de cette partie, et la face 5a précédemment mentionnée, est légèrement plus petite que la hauteur du bord tombé 12 réalisé sur le pourtour du trou oblong 10, comme on le voit bien sur les figures 1, 3, 5 et 7.

On a montré en 13 sur les figures deux rainures sensiblement parallèles et pratiquées sur la face 3a de la barrette 13 en regard de la face 9a de la partie en saillie 9 appartenant à la pièce 5.

Ces deux rainures 13 sont orthogonales à la direction longitudinale de la barrette 3 et permettent le verrouillage de ladite barrette et donc du plot de fixation sur le bord tombé 12 du trou oblong 10, comme on l'expliquera plus loin à propos du fonctionnement.

Dans le mode de réalisation illustré par les figures 1 à 4, la tête 2 se présente sous la forme d'un ergot 14 à faces parallèles 14a et comportant éventuellement un orifice traversant 15.

Le montage et l'utilisation de ce plot seront décrits ci-après.

L'utilisateur tenant le plot par l'ergot 14, introduit, suivant une orientation correcte, la barrette 3 dans le trou oblong 10 ménagé dans le profilé 11. Puis il exerce une pression sur l'ergot 14, ce qui provoque la compression de la rondelle-ressort 6 entre cet ergot et la pièce 5 butant contre le profilé 11, et par conséquent le déplacement de la face 3a de la barrette 3 au-delà du bord tombé 10, de sorte que l'utilisateur pourra faire pivoter l'ergot 14 et donc la barrette 3 de 90 degrés à gauche ou à droite, ladite barrette venant en quelque sorte se mettre en travers du trou oblong 10. En relâchant la pression, les rainures 13 de la barrette 3 viennent s'emboîter sur le bord tombé 12, ce qui, comme on le comprend procure un verrouillage positif de l'ensemble. Plus précisément, la rondelle-ressort 6, sous tension, sollicite constamment d'une part la barrette 3 en position d'appui sur le bord tombé 12 du trou oblong 10, et d'autre part, dans un sens opposé, l'appui de la face 5a de la pièce 5 contre le support 11.

Le plot de fixation des figures 1 à 4 peut être utilisé pour supporter par exemple des étagères, des tablettes ou analogues dans un meuble quelconque, ou encore dans un véhicule automobile, étant bien entendu qu'on prévoiera dans le meuble ou dans le véhicule des trous oblongs tels que 10 à bord tombé 12, suivant un ou des espacements appropriés.

Suivant le mode de réalisation illustré par les figures 5 à 8, la tête 2 du plot de fixation forme ici un bouton bombé convexe 16 comportant sur sa surface extérieure des empreintes 17 pour les doigts qui sont bien visibles sur la figure 8.

Le montage du plot de fixation visible sur les figures 5 à 8 s'effectue de la même façon que pour la réalisation des figures 1 à 4 sauf qu'ici, pour monter le plot, l'utilisateur exerce une poussée avec ses doigts sur le bouton 16. Cette poussée, après insertion de la barrette 3 dans le trou oblong 10, va dégager ladite barrette du bord tombé 12, de sorte que l'utilisateur pourra avec ses doigts faire effectuer une rotation au bouton et donc à la barrette, puis, après relâchement du bouton 16, les rainures 13 de la barrette 3 s'enclencheront sur le bord tombé 12 pour réaliser le verrouillage.

Ce plot de fixation sera tout particulièrement utilisé pour réaliser un arrimage quelconque à l'aide de sangles ou de cordes dans un véhicule par exemple.

Plus précisément, l'arrimage sera réalisé à l'aide de l'anneau 8 monté librement tournant par ses extrémités 8a dans la pièce 7 qui est elle-même montée librement tournante sur l'axe 1 ou plutôt, suivant l'exemple de réalisation représenté, sur une portion 1a de diamètre légèrement plus grand que celui de l'axe 1 proprement dit.

On comprend donc que l'arrimage de charges diverses sera facilité grâce à la rotation de l'anneau 8 dans la pièce 5 et à la rotation de 360 degrés de cette pièce 5 autour de l'axe 1.

**Revendications**

1. Plot de fixation pour montages divers et du type comprenant un axe (1) dont l'une des extrémités porte une tête (2) et dont l'autre extrémité porte un élément allongé (3) qui est insérable dans le trou (10) d'un support quelconque (11) et dont la rotation permet le verrouillage du plot sur le support, tandis qu'entre la tête (2) et l'élément allongé (3), est montée à rotation libre sur l'axe (1) au moins une pièce (5) constamment sollicitée en direction de l'élément allongé (3) par un ressort interposé entre ladite pièce (5) et ladite tête (2), caractérisé en ce que la pièce (5), sollicitée par un ressort sous forme de rondelle-ressort (6) comporte sur sa face (5a) située du côté de l'élément allongé (3), une partie en saillie (9) possèdant une forme oblongue correspondant sensiblement à celle du trou (10) dans le support (11) et une épaisseur définissant une distance entre la face d'extrémité libre (9a) de la pièce (5) et la face (5a) précitée, qui est légèrement plus petite que la hauteur du trou (10).

2. Plot selon la revendication 1, caractérisé par une autre pièce (7) pourvue d'un anneau (8) et montée à rotation libre sur l'axe (1) entre la pièce (5) et la rondelle-ressort (6).

3. Plot selon la revendication 1 ou 2, caractérisé en ce que la face (3a) de l'élément allongé (3) située du côté de la pièce (5) comporte des rainures (13) orthogonales à la direction longitudinale dudit élément allongé, et susceptibles de s'enclencher sur le bord (12) du trou (10).

4. Plot selon l'une des revendications 1 à 3, caractérisé en ce que la tête du plot présente soit la forme d'un ergot (14) à faces parallèles (14a), soit la forme d'un bouton bombé convexe (16) et comportant des empreintes (17) pour les doigts.

5. Support quelconque, tel que montant, paroi ou analogue muni d'au moins un trou oblong possédant un bord tombé et équipé d'au moins un plot de fixation selon l'une des revendications 1 à 4.

**Patentansprüche**

1. Befestigungsstiftbolzen für verschiedene Anordnungen und der einen Schaft (1) aufweisenden Gattung, dessen eines der Enden einen Kopf (2) trägt und dessen anderes Ende ein längliches Element (3) trägt, dass in das Loch (10) irgendeiner Halterung (11) einfügbar ist und dessen Drehung die Verriegelung des Stiftbolzens an der Halterung gestattet, während zwischen dem Kopf (2) und dem länglichen Element (3) wenigstens ein Stück (5) unter ständiger Beaufschlagung in Richtung auf das längliche Element (3) durch eine zwischen dem besagten Stück (5) und dem besagten Kopf (2) einfügte Feder frei drehbar an dem Schaft (1) angeordnet ist, dadurch gekennzeichnet, dass das durch eine Feder in der Gestalt einer Ringfederscheibe (6) beaufschlagte Stück (5) an seiner dem länglichen Element (3) zugewandten Fläche (5a) einen vorspringenden Teil (9) aufweist, der eine etwa derjenigen des Loches (10) in der Halterung (11) entsprechendes längliche Gestalt und eine eine Entfernung zwischen der freien Endfläche (9a) des Stückes (5) und der vorgenannten Fläche (5a), die etwas kleiner ist als die Höhe des Loches (10), bestimmende Dicke aufweist.

2. Stiftbolzen nach Anspruch 1, gekennzeichnet durch ein anderes mit einem Ring (8) versehenes und zwischen dem Stück (5) und der Ringfederscheibe (6) an dem Schaft (1) frei drehbar angeordnetes Stück (7).

3. Stiftbolzen nach Anspruch 1 oder 2, dadurch gekennzeichnet, dass die dem Stück (5) zugewandte Fläche (3a) des länglichen Elementes (3) senkrecht zur Längsrichtung des besagten länglichen Elementes verlaufende und auf den Rand (12) des Loches (10) aufrastbare Nuten (13) aufweist.

4. Stiftbolzen nach einem der Ansprüche 1 bis 3, dadurch gekennzeichnet, dass der Kopf des Stiftbolzens entweder die Gestalt eines Ansatzes (14) mit parallelen Seitenflächen (14a) oder die Gestalt eines Prägungen (17) für die Finger aufweisenden konvexen gewölbten Knopfes (16) aufweist.

5. Mit wenigstens einem einen Rand mit Kragen aufweisenden Langloch versehene mit wenigstens einem Befestigungsstiftbolzen nach einem der Ansprüche 1 bis 4 ausgerüstete irgendwelche Halterung.

**Claims**

1. Fastening stud for various mountings and of the type comprising a shank (1) one of the ends of which carries a head (2) and the other end of which carries an elongated element (3) which is insertable into the hole (10) of any support (11) whatsoever and the rotation of which allows the locking of the stud onto the support whereas between the head (2) and the elongated element (3) is mounted for free rotation onto the shank (1) at least one part (5) constantly urged towards the elongated element (3) by a spring interposed between the said part (5) and the said head (2), characterized in that the part (5) biased by a spring in the shape of a spring washer (6) comprises on its face (5a) located towards the elongated element (3) a projecting portion (9) having an oblong shape corresponding substantially to that of the hole (10) in the support (11) and a thickness defining a distance between the free end face (9a) of the part (5) and the aforesaid face (5a) which is slightly smaller than the height of the hole (10).

2. Stud according to claim 1, characterized by another part (7) provided with a ring (8) and mounted for free rotation onto the shank (1) between the part (5) and the spring washer (6).

3. Stud according to claim 1 or 2, charactrized in that the face (3a) of the elongated element (3) located towards the part (5) comprises grooves (13) orthogonal to the longitudinal direction of the said elongated element and adapted to be engaged with the edge (12) of the hole (10).

4. Stud according to one of claims 1 to 3, characterized in that the head of the stud exhibits either the shape of a lug (14) with parallel faces (14a) or the shape of a convex bulged button (16) and comprising impressions (17) for the fingers.

5. Any support whatsoever such as an upright, a wall or the like provided with at least one oblong hole having a flanged edge and fitted with at least one fastening stud according to one of claims 1 to 4.

*Fig. 1*

*Fig. 2*

*Fig. 3*

*Fig. 4*

Fig. 5

Fig. 6

Fig. 7

Fig. 8